(19) Europäisches Patentamt
European Patent Office
Office européen des brevets

(11) EP 1 614 536 A2

(12) EUROPÄISCHE PATENTANMELDUNG

(43) Veröffentlichungstag:
**11.01.2006 Patentblatt 2006/02**

(51) Int Cl.:
*B32B 27/36* *(2006.01)*

(21) Anmeldenummer: **05013860.1**

(22) Anmeldetag: **28.06.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **06.07.2004 DE 102004032596**

(71) Anmelder: **Mitsubishi Polyester Film GmbH
65023 Wiesbaden (DE)**

(72) Erfinder:
- **Kiehne, Thorsten, Dr.
Nagahama
Shiga 526-0031 (JP)**
- **Murschall, Ursula, Dr.
55283 Nierstein (DE)**
- **Kliesch, Holger, Dr.
65462 Ginsheim-Gustavsburg (DE)**

(74) Vertreter: **Schweitzer, Klaus et al
Patentanwaltskanzlei Zounek,
Industriepark Kalle-Albert,
Gebäude H391
Rheingaustrasse 190-196
65174 Wiesbaden (DE)**

# (54) Mehrschichtige, matte, thermoformbare, IR-reflektierende Polyesterfolie

(57) Mehrschichtige, biaxial orientierte Polyesterfolien, welche als Hauptbestandteil der Basisschicht B einen kristallisierbaren Polyester mit erhöhtem Diethylenglykol- und/oder Polyethylenglykol- und/oder Isophthalsäuregehalt, bevorzugt Polyethylenterephthalat, und bevorzugt in den Deckschichten mindestens ein IR-reflektierendes Pigment und einen UV-Stabilisator enthaltenen, zeichnen sich insbesondere durch eine einstellbare Mattigkeit, ein diffuses Streuvermögen für sichtbares Licht, eine hohe Lichttransmission, IR-Reflexion und eine gute Thermoformbarkeit aus und sind für Wärmeschutzauskleidungen oder Wärmeschutzverpackungen geeignet.

EP 1 614 536 A2

## Beschreibung

Die Erfindung betrifft eine mehrschichtige, matte, IR-reflektierende, thermoformbare, biaxial orientierte Folie aus einem kristallisierbaren Polyester, deren Dicke bevorzugt im Bereich von 3 bis 200 µm liegt. Die Folie enthält mindestens ein IR-reflektierendes Pigment und einen UV-Stabilisator. Die mehrschichtige Folie zeichnet sich durch eine gute Verstreckbarkeit, eine einstellbare Mattigkeit, durch ein diffuses Streuvermögen des sichtbaren Lichtes, durch eine geringe Durchlässigkeit für IR-Strahlung, durch eine hohe Lichttransmission, durch sehr gute mechanische Eigenschaften in Längs- und Querrichtung, durch eine gute Thermoformbarkeit, durch eine geringe Vergilbung nach längerer Zeit unter Sonneneinstrahlung und durch eine wirtschaftliche Herstellung aus. Die Erfindung betrifft ferner ein Verfahren zur Herstellung dieser Folie und ihre Verwendung.

Biaxial orientierte Polyesterfolien im Dickenbereich 3 bis 200 µm sind hinreichend als transparente, matte und weiße Folien bekannt. Diese Folien werden mit Pigmenten wie z. B. Siliciumdioxid, Calciumcarbonat, Bariumsulfat, Kaolin, Titandioxid, Aluminiumoxid oder Kombinationen daraus hergestellt. Diese Folien sind in der Regel nicht thermoformbar, zeigen kein diffuses Streuverhalten des sichtbaren Lichtes und reflektieren IR-Strahlung nicht.

In der EP 0 659198 B1 sind Solarstrahlungs-, Abschirmungs- bzw. Filter-Verbundmaterialien für die Verwendung in der Landwirtschaft und im Gartenbau beschrieben. Diese Folien bestehen aus einem transparenten Polymer, ausgewählt aus der Gruppe Polyethylen mit niedriger oder hoher Dichte, Ethylen/Vinylacetat-Copolymer, Polytetrafluorethylen, Polyvinylendichlorid, Polyvinylchlorid, Polycarbonat, Polymethylmethacrylat oder Mischungen daraus. Diese Folien enthalten 0,1 bis 30 Gew.-% von einem Interferenzpigment, das aus einem plättchenförmigen Material besteht, das mit einem oder mehreren Metalloxiden beschichtet ist. Diese Folien zeichnen sich durch eine selektive Abschirmung von Strahlung aus, die sich positiv auf das Wachstum von Pflanzen auswirkt.

In EP 0 791 620 A2 werden Folien für landwirtschaftliche Anwendungen aus Polyetheramidblockcopolymeren, thermoplastischen Polyesterelastomeren oder thermoplastischen Polyurethanen beschrieben, die eine Wasserdampfdurchlässigkeit zwischen 100 und 25.000 g/m$^2$/24 h, eine Transmission zwischen 20 und 90 % für sichtbares Licht und eine Transmission zwischen 5 und 90 % für Wärmestrahlung mit einer Wellenlänge von 5 µm haben. Die Folien enthalten plättchenförmige anorganische Partikel die mit einer Substanz mit hohem Brechungsindex beschichtet sind.

Die beschriebenen Folien sind nicht biaxial orientiert und haben ungenügende mechanische Eigenschaften in Längs- und Querrichtung, so dass sie für viele Anwendungen, wo hohe Reißfestigkeiten, ein hoher E-Modul, hohe Reißdehnungen und hohe Zugspannungen zur Erzeugung einer Dehnung von 5 % ($F_5$-Wert) gefordert sind, unbrauchbar sind.

Des weiteren sind die beschriebenen Folien für den Thermoformprozess ungeeignet, da eine unkontrollierte Ausrichtung der durch den Schmelzefluss partiell ausgerichteten Pigmente erfolgen würde. Damit würden die optischen Eigenschaften der Folie wie Glanz, Trübung und Mattigkeit durch Vakuolenbildung der Pigmente und Verstreckung der Folie unkontrolliert beeinflusst.

Des weiteren vergilben diese Folien durch längere Sonneneinstrahlung, so dass Sie unansehnlich werden. Auch werden die Folien in ihren mechanischen Eigenschaften durch Sonneneinstrahlung geschädigt, so dass sie nach kürzester Zeit verspröden. Dieser Einfluss, bewirkt durch den kurzwelligen Anteil des Sonnenlichtes, ist bei pigmentierten Folien, insbesondere bei Folien, die photoaktive Metalloxide wie z. B. Titandioxid enthalten, sehr viel stärker ausgeprägt als bei unpigmentierten Folien.

In EP 1 251 369 A2 werden biaxial orientierte mehrschichtige Polyesterfolien beschrieben, die in der Basisschicht einen IR-absorbierenden Farbstoff enthalten und die sich zur Verwendung als IR-Filter eignen. Dieser Farbstoff hat ein Absorptionsmaximum zwischen 800 und 1000 nm und bewirkt, dass die Folie bei 950 nm eine maximale Transmission von 30 % aufweist.

Die beschriebenen Folien sind infolge der Verwendung von Standardpolyestern in Verbindung mit ihrer biaxialen Orientierung für Thermoformprozesse ungeeignet.

Des weiteren sind die beschriebenen Folien nicht für Außenanwendungen geeignet, da die Folien durch längere Sonneneinstrahlung in ihren mechanischen und optischen Eigenschaften beeinträchtigt werden. Da es sich bei den verwendeten IR-absorbierenden Farbstoffen um empfindliche organische Moleküle handelt, die durch Bestrahlung mit Sonnenlicht zerstört werden, lässt die IR-Filterwirkung der beschriebenen Folien bei Außenanwendungen schnell nach.

Aufgabe der vorliegenden Erfindung war es daher, eine matte, IR-reflektierende, thermoformbare, Polymerfolie bereitzustellen, welche die aus dem Stand der Technik bekannten Nachteile verschiedener Folientypen nicht aufweist.

Weiterhin sollte eine solche Folie neben einer wirtschaftlichen Herstellung und einer guten Verstreckbarkeit in Längs- und Querrichtung eine einstellbare Mattigkeit, eine gute Thermoformbarkeit und vor allem sehr gute mechanische Eigenschaften, das bedeutet eine hohe Reißfestigkeit in Längs- und Querrichtung, einen hohen E-Modul in Längs- und Querrichtung, eine hohe Reißdehnung in Längs- und Querrichtung und eine hohe Zugspannung zur Erzeugung einer Dehnung von 5 % ($F_5$-Wert) in Längs- und Querrichtung aufweisen und sich insbesondere durch eine hohe Lichttransmission, ein diffuses Streuverhalten des sichtbaren Lichtes, eine geringe Durchlässigkeit für IR-Strahlung und durch eine geringe Gelbzahländerung nach längerer Sonneneinstrahlung auszeichnen.

Gelöst wird die Aufgabe durch eine mehrschichtige, biaxial orientierte Polyesterfolie, die als Hauptbestandteil der Basisschicht B kristallisierbaren Polyester enthält, der einen DEG-Gehalt von bevorzugt größer/gleich 1 Gew.-% und/oder einen IPA-Gehalt von bevorzugt größer/gleich 2 Gew.-% und/oder einen PEG-Gehalt von bevorzugt größer/gleich 1 Gew.-% aufweist. Diese Folie ist dadurch gekennzeichnet, dass sie mindestens ein IR-reflektierendes, bevorzugt plättchenförmiges Pigment und mindestens einen UV-Stabilisator enthält. Pigment und UV-Stabilisator werden bevorzugt mittels Masterbatchtechnologie bei der Folienherstellung zugesetzt. Die erfindungsgemäße Folie hat bevorzugt eine Dicke von 3 bis 200 μm, insbesondere von 5 bis 150 μm. DEG steht für Diethylenglykol, PEG für Polyethylenglykol und IPA für Isophthalsäure. Die Folie kann einen oder mehrere kristallisierbare Polyester als Hauptbestandteile enthalten.

Die Herstellung der erfindungsgemäßen Folie erfolgt bevorzugt durch Coextrusion.

In Bezug auf die bevorzugten Folieneigenschaften gilt folgendes:

Zu einer guten Verstreckbarkeit zählt, dass sich die Folie bei ihrer Herstellung sowohl in Längs- wie auch in Querrichtung hervorragend und ohne Abrisse orientieren lässt.

Zu der wirtschaftlichen Herstellung zählt, dass die Rohstoffe bzw. die Rohstoffkomponenten, die zur Herstellung der Folie benötigt werden, mit handelsüblichen Industrietrocknern, die dem Stand der Technik genügen, getrocknet werden können. Wesentlich ist, dass die Rohstoffe dabei nicht verkleben und nicht thermisch abgebaut werden. Zu diesen Industrietrocknern nach dem Stand der Technik zählen Vakuumtrockner, Wirbelschichttrockner, Fließbetttrockner oder Festbetttrockner (Schachttrockner).

Thermoformbarkeit bedeutet, dass sich die Folie auf handelsüblichen Tiefziehmaschinen ohne unwirtschaftliches Vortrocknen zu komplexen und großflächigen Formkörpern tiefziehen bzw. thermoformen lässt.

Eine einstellbare Mattigkeit bedeutet, dass der Glanz und auch die Rauigkeit der Folie sowohl über die Abmessungen des IR-reflektierenden Pigments (Längsausdehnung zu Querausdehnung) als auch über die Verfahrens- und Orientierungsparameter während des Folienherstellungsprozess eingestellt werden können. Mattigkeit bedeutet auch, dass die erfindungsgemäße Folie Vakuolen aufweist, deren Länge bevorzugt im Bereich von 0,5 bis 20 μm liegen.

Zu den guten mechanischen Eigenschaften zählen unter anderem ein hoher E-Modul (in Längsrichtung = Maschinenrichtung (MD) größer als 3.200 $N/mm^2$, in Querrichtung (TD) größer als 3.500 $N/mm^2$), hohe Reißfestigkeitswerte (in MD mehr als 100 $N/mm^2$; in TD mehr als 130 $N/mm^2$), hohe Reißdehnungswerte (in MD und TD mehr als 100 %), und hohe Zugspannungen zur Erzeugung einer Dehnung von 5 % ($F_5$-Wert; in MD und TD mehr als 100 $N/mm^2$).

Eine hohe Lichttransmission bedeutet, dass die Lichttransmission bei größer (>) 75 % liegt.

Diffuses Streuverhalten bedeutet, dass die Bildschärfe bei kleiner (<) 85 % liegt.

Eine geringe Durchlässigkeit für IR-Strahlung bedeutet, dass die Transmission für elektromagnetische Strahlung im Wellenlängenbereich zwischen 750 und 1300 nm kleiner als 50 % ist.

Unter einer geringen Vergilbung versteht man, dass die Gelbzahländerung (ΔYID) der Folie nach 5000 h Bewitterung in einem Weather-o-meter bei kleiner (<) 6 liegt.

Diese oben genannten Werte sind bevorzugte Parameter der erfindungsgemäßen Folie.

Die erfindungsgemäße Folie enthält als Hauptbestandteil einen kristallisierbaren Polyester. Erfindungsgemäß versteht man unter kristallisierbarem Polyester kristallisierbare Homopolyester, kristallisierbare Copolyester, kristallisierbare Blends verschiedener Polyester, kristallisierbares Rezyklat und andere Variationen von kristallisierbaren Polyester.

Geeignete kristallisierbare bzw. teilkristalline Polyester sind z. B. Polyethylenterephthalat (PET), Polyethylennaphthalat (PEN), Polybutylenterephthalat (PBT), Polytrimethylenterephthalat (PTT), wobei Polyethylenterephthalat (PET) bevorzugt ist.

Erfindungswesentlich ist, dass der kristallisierbare Polyester gegenüber Standardpolyestern einen erhöhten DEG-, und/oder PEG- und/oder IPA-Gehalt aufweist. Bevorzugt ist, dass der kristallisierbare Polyester einen DEG-Gehalt von 1,0 bis 10 Gew.-%, vorzugsweise 1,2 bis 5,0 Gew.-% und insbesondere 1,3 bis 3,0 Gew.-% und/oder einen PEG-Gehalt von 1,0 bis 10 Gew.-%, vorzugsweise 1,2 bis 5,0 Gew.-%, insbesondere 1,3 bis 3,0 Gew.-% und/oder einen IPA-Gehalt von 2,0 bis 20 Gew.-%, vorzugsweise 3,0 bis 15 Gew.-% und insbesondere 5,0 bis 10 Gew.-% aufweist.

Es war mehr als überraschend, dass sich die Folien durch ein im Vergleich zum Standardpolyester höheren DEG-Gehalt und/oder PEG-Gehalt und/oder IPA-Gehalt wirtschaftlich auf handelsüblichen Tiefziehanlagen thermoformen lassen und eine hervorragende Detailwiedergabe liefern, ohne dass die optischen Eigenschaften wie Glanz und Mattigkeit messbar verändert werden.

Die Standardviskosität SV (DCE) des Polyesters liegt allgemein zwischen 600 und 1.000, vorzugsweise zwischen 700 und 900.

Bevorzugte Ausgangsmaterialien zur Herstellung der erfindungsgemäßen Folle sind kristallisierbare Polyester mit einer Kristallitschmelztemperatur Tm von 180 bis 365 °C und mehr, vorzugsweise von 180 bis 310 °C, einem Kristallisationstemperaturbereich $T_c$ zwischen 75 und 280 °C, einer Glasübergangstemperatur $T_g$ von 65 bis 130 °C (bestimmt durch Differential Scanning Calorimetry (DSC) bei einer Dichte von 1,10 bis 1,45 $g/cm^3$ (bestimmt durch DIN 53479) und einer Kristallinität zwischen 5 und 65 %, vorzugsweise 20 und 65%.

Das Schüttgewicht der Polyester (gemessen nach DIN 53466) liegt in der Regel zwischen 0,75 und 1,0 kg/dm$^3$, bevorzugt zwischen 0,8 und 0,90 kg/dm$^3$.

Die Polydispersität (=Verhältnis von Mw zu Mn) des Polyesters, gemessen durch Gelpermeationschromatographie (GPC), liegt bevorzugt zwischen 1,5 und 4,0, besonders bevorzugt zwischen 2,0 and 3,5.

"Hauptbestandteil" heißt, dass der Anteil des oder der kristallisierbaren bzw. teilkristallinen Polyester in der Basisschicht B bevorzugt zwischen 50 und 100 Gew.-%, besonders bevorzugt zwischen 75 und 95 Gew.-% beträgt, jeweils bezogen auf das Gesamtgewicht der Basisschicht B. Die restlichen Anteile können neben dem IR-reflektierenden Pigment weitere, für biaxial orientierte Polyesterfolien übliche Additive oder Pigmente ausmachen, wie z. B. UV-Stabilisatoren, Flammschutzmittel und Farbstoffe.

Die erfindungsgemäße Folie besteht aus mindestens einer Basisschicht B, mindestens einer Deckschicht A oder C und gegebenenfalls weiteren Zwischenschichten, wobei insbesondere ein dreischichtiger A-B-A- oder A-B-C-Aufbau bevorzugt ist. Für diese Ausführungsform ist es vorteilhaft, wenn der kristallisierbare Polyester der Basisschicht B eine ähnliche Schmelzeviskosität besitzt wie der der Deckschichten, die an die Basisschicht angrenzen.

Die Deckschichten und evtl. vorhandene Zwischenschichten können die gleichen oder zum Teil die gleichen Komponenten enthalten, auch in den beschriebenen Konzentrationen, wie die Basisschicht. Bevorzugt enthalten die Deck- und Zwischenschichten den kristallisierbaren bzw. teilkristallinen Polyester der Basisschicht.

In einer besonderen Ausführungsform können die Basisschicht und/oder die Deckschichten und/oder eventuell vorhandene Zwischenschichten der mehrschichtigen Folie auch aus einem Polyethylennaphthalat-Homopolymeren oder aus Polyethylenterephtalat/Polyethylennaphthalat-Copolymeren oder einem Polyethylenterephthalat/Polyethylennaphthalat-Blend bestehen. In dieser Ausführungsform haben die Polyester der Deck- und Zwischenschichten bevorzugt ebenfalls ähnliche Schmelzeviskositäten wie der Polyester der Basisschicht.

In der erfindungsgemäßen Folie ist das IR-reflektierende Pigment und die weiteren Additive und/oder Pigmente vorzugsweise in der Basisschicht enthalten. Jedoch können nach Bedarf auch die Deckschichten und/oder eventuell vorhandene Zwischenschichten mit IR-reflektierenden Pigmenten und weiteren Additiven und/oder Pigmenten ausgerüstet sein.

Die erfindungsgemäße Folie enthält mindestens ein, bevorzugt plättchenförmiges, IR-reflektierendes Pigment und mindestens einen UV-Stabilisator. Vorteilhaft ist, wenn das Pigment über Masterbatchtechnologie direkt bei der Folienherstellung zudosiert wird, wobei die Konzentration des IR-reflektierenden Pigmentes bevorzugt zwischen 0,5 und 50 Gew.-%, vorzugsweise zwischen 1 und 25 Gew.-% und insbesondere zwischen 1,5 und 10 Gew.-%, bezogen auf das Gewicht der damit ausgerüsteten Schicht, liegt.

Geeignete plättchenförmige, IR-reflektierende Pigmente sind beispielsweise Schichtsilikate wie z. B. Kaolin, Talk, Feldspat, die mit Metalloxiden wie z. B. Titandioxid, Zirkoniumdioxid, Aluminiumoxid und/oder Siliciumdioxid beschichtet sind. Die Größe der Pigmente liegt bevorzugt zwischen 1 und 100 $\mu$m. Derartige Pigmente sind z. B. in der EP0414049 der Firmen Merck und Hyplast beschrieben, wobei ® Iriodin SHR 870 und ® Iriodin SHR 875 der Fa. Merck, DE besonders bevorzugt sind.

Grundsätzlich sind alle, bevorzugt plättchenförmige, IR-reflektierende Pigmente für den erfindungsgemäßen Zweck geeignet.

Wichtig ist, dass diese Pigmente durch die Orientierung der Folie ausgerichtet werden und je nach Orientierung mehr oder weniger große Vakuolen ausbilden. Diese Vakuolen bestimmen das optische Erscheinungsbild der Folie und das diffuse Streuverhalten für sichtbares Licht. Das bedeutet, bei identischem Pigmentgehalt in der Folie können deren Optik und das diffuse Streuverhalten über die Strecktemperaturen und die Streckparameter bei der Folienherstellung eingestellt werden.

Mehr als überraschend war, dass der hohe DEG- und/oder PEG- und/oder IPA-Gehalt des Polyesters das Entstehen und das Ausbilden von Vakuolen nicht beeinträchtigt.

Da diese Vakuolen bereits durch die Orientierung optimal ausgebildet und durch die Thermofixierung stabilisiert sind, kommt es während des Thermoformprozesses zu keiner negativen Beeinflussung der optischen Eigenschaften.

Elektromagnetische Strahlung im Wellenlängenbereich von 750 bis 1300 nm (IR) ist insbesondere für die Aufheizung von Innenräumen verantwortlich. Diese Strahlung führt ebenfalls bei wärmeempfindlicher Güter zur Schädigung.

Die Folie gemäß der Erfindung reflektiert Strahlung in diesem Wellenlängenbereich, so dass die Transmission der Folie zwischen 750 und 1300 nm bevorzugt geringer als 50 % ist. Folglich wärmen sich Innenräume weniger auf und die Verpackung wärmeempfindlicher Güter ist möglich, wenn die erfindungsgemäße Folie entsprechend eingesetzt wird.

Ganz überraschend haben Anwendungstests, IR-Spektren und UV-Spektren gezeigt, dass es im Falle einer dreischichtigen Folie durchaus ausreichend ist, die bevorzugt 0,5 bis 4,0 $\mu$m dicken Deckschichten mit den plättchenförmigen, IR-reflektierenden Pigmenten und dem UV-Stabilisator auszurüsten, um geringe IR-Durchlässigkeit in Kombination mit der niedrigen Gelbzahl, dem Vakuolenbildungsprozess, dem diffusen Streuverhalten, derguten Thermoformbarkeit ohne Veränderung der Vakuolen und Mattigkeit und die übrigen Eigenschaften zu erreichen. Bei Bedarf und

bevorzugt bei hohen Anforderungen kann auch die Basisschicht mit plättchenförmigem, IR-reflektierenden Pigment und UV-Stabilisator ausgerüstet sein, d. h. eine sogenannte Grundausrüstung beinhalten.

Darüber hinaus ergaben Messungen der optischen Eigenschaften, dass die erfindungsgemäße Folie mit einer sehr niedrigen Gelbzahl (kleiner [< ] 4) produziert werden kann und dass die erfindungsgemäße Folie nach 5000 h WOM-Bewitterung, was einer Außenbewitterung von etwa 5 Jahren in Mitteleuropa gleichkommt, eine extrem kleine Gelbzahländerung (kleiner [<] 6 ) zeigt.

Die erfindungsgemäße Folie enthält neben dem IR-reflektierenden Pigment mindestens einen UV-Stabilisator.

Licht, insbesondere der ultraviolette Anteil der Sonnenstrahlung, d. h. der Wellenlängenbereich von 280 bis 400 nm, induziert bei Polyestern Abbauvorgänge, als deren Folge sich nicht nur das visuelle Erscheinungsbild durch eintretende Farbänderung bzw. Vergilbung ändert, sondern durch die auch mechanisch-physikalischen Eigenschaften der Folien aus den Polyestern äußerst negativ beeinflusst werden.

Die Unterbindung dieser photooxidativen Abbauvorgänge ist von erheblicher technischer und wirtschaftlicher Bedeutung, da andernfalls die Anwendungsmöglichkeiten von Polyestern und daraus hergestellten Folien drastisch eingeschränkt sind.

Polyethylenterephthalate beginnen beispielsweise schon unterhalb von 360 nm UV-Licht zu absorbieren, ihre Absorption nimmt unterhalb von 320 nm beachtlich zu und ist unterhalb von 300 nm sehr ausgeprägt. Die maximale Absorption liegt im Bereich zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren, d.h. UV-Absorber als Lichtschutzmittel, sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für hell gefärbte oder gar gedeckt eingefärbte Folien ungeeignet, da sie zur Verfärbung oder Farbänderung führen.

Geeignete UV-Stabilisatoren als Lichtschutzmittel sind UV-Stabilisatoren, die bevorzugt mindestens 70 %, vorzugsweise 80 %, besonders bevorzugt mindestens 90 %, des UV-Lichts im Wellenlängenbereich von 180 nm bis 380 nm, vorzugsweise von 280 bis 350 nm, absorbieren. Diese sind insbesondere dann geeignet, wenn sie im Temperaturbereich von 260 bis 300 °C thermisch stabil sind, d.h. sich nicht in Spaltprodukte zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, Benzoxazinone, sterisch gehinderte Amine und Triazine, wobei die 2-Hydroxybenzotriazole, die Benzoxazinone und die Triazine bevorzugt sind.

Es war überraschend, dass der Einsatz von UV-Stabilisatoren in Kombination mit den vorher beschriebenen IR-reflektierenden Pigmenten zu brauchbaren Folien mit hervorragenden Eigenschaften führt.

Die erfindungsgemäße Folie schützt beispielsweise Packgüter vor kurzwelligem Licht im Wellenlängenbereich von 200 bis 380 nm und hat eine Transmission von bevorzugt kleiner (<) 50 % für Strahlung im Wellenlängenbereich von 750 bis 1300 nm, wodurch eine unerwünschte Aufheizung des Packgutes und damit ein vorzeitiges Verderben verhindert wird. Des weiteren bietet die Folie bei Verwendung im Bausektor einen Wärmeschutz, d. h. sie vermindert das Aufheizen von Innenräumen ohne Vergilbung unter längerer Sonneneinstrahlung.

Aus der Literatur sind UV-Stabilisatoren bekannt, die UV-Strahlung absorbieren und somit Schutz bieten. Beim Einsatz dieser bekannten und handelsüblichen UV-Stabilisatoren stellt man jedoch fest, dass der UV-Stabilisator eine mangelnde thermische Stabilität hat und sich bei Temperaturen zwischen 200 und 240 °C zersetzt oder ausgast. Man hätte daher große Mengen (ca. 10 bis 15 Gew.-%) an UV-Stabilisator in die Folie einarbeiten müssen, damit dieser das UV-Licht wirklich wirksam absorbiert. Bei dieser hohen Konzentration verfärbt sich jedoch die Folie schon deutlich während des Herstellungsprozesses. Auch die mechanischen Eigenschaften werden negativ beeinflusst. Beim Verstrecken treten ungewöhnliche Probleme auf, wie Abrisse wegen mangelnder Festigkeit der Folie (niedrige Reißfestigkeit und E-Modul), Düsenablagerungen, die zu Profilschwankungen führen, Ablagerungen von UV-Stabilisator und Pigment auf den Walzen, was zur Beeinträchtigung der optischen Eigenschaften (starke Trübung, Klebedefekte, inhomogene Oberfläche) führt, und Ablagerungen im Streck- und Fixierrahmen, die die Folie verunreinigen. Es war daher überraschend, dass bereits mit niedrigen Konzentrationen der bevorzugten UV-Stabilisatoren ein hervorragender UV-Schutz erzielt wird und eine Folie mit geringem Gelbwert erhalten wird. Der Schutz gegen Strahlung im Wellenlängenbereich zwischen 750 bis 1300 nm bleibt von der Anwesenheit des UV-Stabilisators überraschender Weise völlig unbeeinflusst.

In einer ganz besonders bevorzugten Ausführungsform enthält die erfindungsgemäße Folie als UV-Stabilisator 2-(4,6-Diphenyl-[1,3,5]triazin-2-yl)-5-hexyloxyphenol der Formel

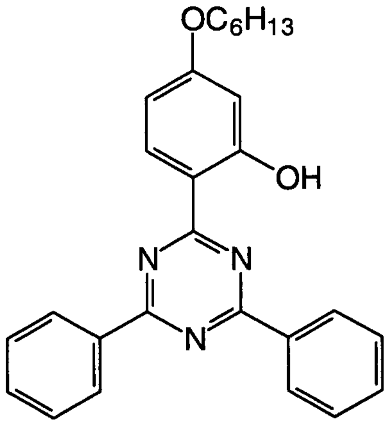

oder 2,2'-Methylen-bis-[6-benzotriazol-2-yl]-4-(1,1,2,2-tetramethyl-propyl)-phenol der Formel

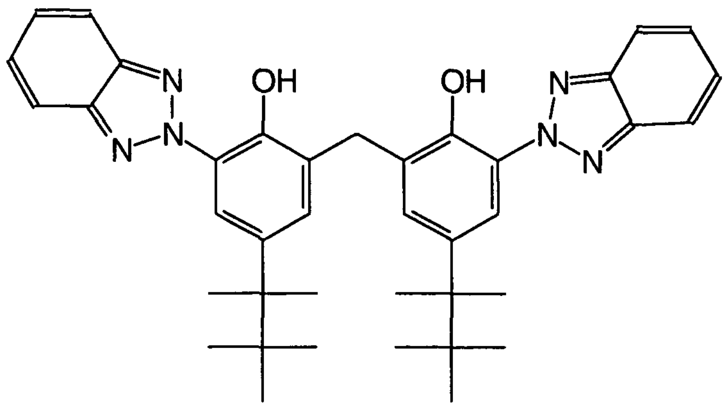

oder 2,2'-(1,4-Phenylen)-bis-([3,1]benzoxazin-4-on) der Formel

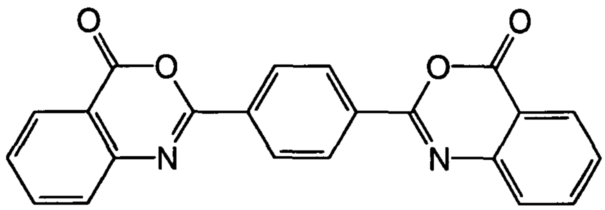

Diese und andere erfindungsgemäße UV-Stabilisatoren sind im Handel erhältlich.

In einer weiteren Ausführungsform können auch Mischungen dieser UV-Stabilisatoren oder Mischungen von mindestens einem dieser UV-Stabilisatoren mit anderen UV-Stabilisatoren eingesetzt werden. Die Gesamtkonzentration an Lichtschutzmittel beträgt vorzugsweise 0,1 bis 5,0 Gew.-%, besonders bevorzugt 0,5 bis 3,0 Gew.-%, bezogen auf das Gewicht der damit ausgerüsteten Schichten.

Basisschicht und/oder Deckschichten und ggf. vorhandene Zwischenschichten der Folie können neben dem bevorzugt plättchenförmigen, IR-reflektierenden Pigment und dem UV-Stabilisator zusätzlich weitere übliche Additive, wie z. B. Füllstoffe und Antiblockmittel, enthalten. Sie werden zweckmäßig dem Polymer bzw. der Polymermischung bereits vor dem Aufschmelzen zugesetzt.

Als Additive können auch Mischungen von zwei oder mehr verschiedenen Antiblockmitteln oder Mischungen von Antiblockmitteln gleicher Zusammensetzung aber unterschiedlicher Partikelgröße gewählt werden. Die Partikel können den einzelnen Schichten in den üblichen Anteilen, z. B. bereits bei der Polyesterherstellung als glykolische Dispersion oder über Masterbatche bei der Extrusion zugegeben werden. Als besonders geeignet haben sich Pigmentkonzentrationen von 0,0001 bis 10 Gew.-%, bezogen auf das Gewicht der damit ausgerüsteten Schichten, erwiesen.

Für bestimmte Anwendungen kann es zweckmäßig sein, die Oberfläche der Folie mit einer Säure chemisch vorzubehandeln. Für diese sogenannte Ätzhaftvermittlung eignen sich insbesondere Trichloressigsäure, Dichloressigsäure oder Flusssäure, die für eine kurze Zeit (zwischen 5 und 120 Sekunden) auf die Oberfläche einwirken und dann mittels Luftmesser wieder entfernt werden. Dadurch erhält die Folie eine sehr reaktive, amorphe Oberfläche.

Die erfindungsgemäße Folie kann mindestens eine weitere Funktionalität aufweisen. Die zusätzliche Funktionalität besteht vorzugsweise darin, dass die Folie auf einer oder auf beiden Seiten beschichtet, flammhemmend ausgerüstet und/oder corona- oder flammbehandelt ist.

Im Falle einer ein- oder beidseitigen Beschichtung der Folie hat die getrocknete Beschichtung in der Regel eine Dicke von 5 bis 100 nm, bevorzugt 20 bis 70 nm, insbesondere 30 bis 50 nm. Sie wird bevorzugt inline aufgebracht, d. h. während des Folienherstellprozesses, zweckmäßigerweise vor der Querverstreckung. Besonders bevorzugt ist die Aufbringung mittels des "Reverse gravure-roll coating"-Verfahrens, bei dem sich die Beschichtung äußerst homogen in der genannten Schichtdicke auftragen lässt. Die Beschichtungen werden - bevorzugt wässrig - als Lösungen, Suspensionen oder Dispersionen aufgetragen, um der Folienoberfläche zusätzliche Funktionalitäten zu verleihen. Beispiele für Stoffe oder Zusammensetzungen, die zusätzliche Funktionalität verleihen, sind Acrylate (siehe WO 94/13476), Ethylenvinylalkohole, Polyvinylidenchlorid, Wasserglas (Natriumsilikat), Aminosilane (beschrieben in EP 0 359 017 oder EP 0 346 768), hydrophile Polyester (5-Natriumsulfoisophthalsäurehaltige PET/IPA-Polyesterwie in EP-A-144 878 oder US-A 4,252,885 genannt), Copolymere mit Vinylacetateinheiten (siehe WO 94/13481), Polyvinylacetate, Polyurethane, Alkali- oder Erdalkalisalze von ($C_{10}$ - $C_{18}$) - Fettsäuren, Copolymere mit Einheiten aus Butadien und Acrylnitril, Methylmethacrylat, Methacrylsäure und/oder Acrylsäure und/oderderen Ester. Die Stoffe oder Zusammensetzungen, die die zusätzliche Funktionalität verleihen, können die üblichen Additive, wie Antiblockmittel und/oder pH-Stabilisatoren, in Mengen von bevorzugt 0,05 bis 5 Gew.-%, vorzugsweise 0,1 bis 3 Gew.-% enthalten.

Die genannten Stoffe oder Zusammensetzungen werden als verdünnte, vorzugsweise wässrige Lösung, Emulsion oder Dispersion auf eine oder beide Seiten der Folie aufgebracht. Anschließend wird das Lösungsmittel entfernt. Werden die Beschichtungen inline vor der Querstreckung aufgebracht, reicht gewöhnlich die Temperaturbehandlung im Streckrahmen aus, um das Lösungsmittel zu verflüchtigen und die Beschichtung zu trocknen. Die getrocknete Beschichtungen haben dann in der Regel Schichtdicken von 5 bis 100 nm, bevorzugt 20 bis 70 nm, insbesondere 30 bis 50 nm.

Zur Einstellung weiterer gewünschter Eigenschaften kann die Folie auch corona- bzw. flammbehandelt sein. Die Behandlung wird üblicherweise so durchgeführt, dass die Oberflächenspannung der Folie danach im allgemeinen über 45 mN/m liegt.

In einer weiteren Ausführungsform ist die erfindungsgemäße Folie flammhemmend ausgerüstet. Flammhemmend bedeutet, dass die Folie in einer sogenannten Brandschutzprüfung die Bedingungen nach DIN 4102 Teil 2 und insbesondere die Bedingungen nach DIN 4102 Teil 1 erfüllt und in die Baustoffklasse B2 und insbesondere B1 der schwer entflammbaren Stoffe eingeordnet werden kann. Des weiteren soll die gegebenenfalls flammhemmend ausgerüstete Folie in einem Brandtest gemäß UL94 VTM mindestens die Brandklasse VTM-2 erreichen.

Ganz überraschend haben Brandtests nach DIN 4102 und UL94 VTM gezeigt, dass es durchaus ausreichend ist, z. B. lediglich die Kernschicht der Folie mit Flammschutzmittel auszurüsten, um ein verbessertes Brandschutzverhalten zu erreichen. Bei Bedarf und bei hohen Brandschutzanforderungen können auch die Deckschichten der Folie flammhemmend ausgerüstet sein.

Die Folie enthält dann mindestens ein Flammschutzmittel, das bevorzugt über Masterbatchtechnologie direkt bei der Folienherstellung zudosiert wird, wobei der Anteil des Flammschutzmittels allgemein im Bereich von 0,2 bis 30 Gew.-%, bevorzugt 0,5 bis 25 Gew.-%, besonders bevorzugt von 1,0 bis 20 Gew.-%, bezogen auf das Gewicht der damit ausgerüsteten Schicht, liegt. Im Masterbatch beträgt der Anteil des Flammschutzmittels allgemein 5 bis 60 Gew.-%, bevorzugt 10 bis 50 Gew.-%, jeweils bezogen auf das Gesamtgewicht des Masterbatches. Geeignete Flammschutzmittel sind beispielsweise organische Brom-, Chlor- oder Stickstoffverbindungenverbindungen oder Metallhydroxide oder -trihydrate. Die Halogenverbindungen haben allerdings den Nachteil, dass im Brandfall toxische und korrosiv wirkende Halogenwasserstoffe entstehen können. Nachteilig ist auch die geringe Lichtbeständigkeit einer damit ausgerüsteten Folie.

Wesentlich ist, dass das Flammschutzmittel im Polymer bzw. Polyester löslich ist, da andernfalls die geforderten optischen Eigenschaften nicht erfüllt werden.

Weitere geeignete Flammschutzmittel sind beispielsweise organische Phosphorverbindungen wie Carboxyphosphinsäuren, deren Anhydride und Methanphosphonsäuredimethylester. Sehr geeignet sind hierbei Flammschutzmittel, bei denen die Phosphorverbindung chemisch an den Polyester gebunden ist.

In dieser bevorzugten Ausführungsform enthält die erfindungsgemäße schwer entflammbare Folie neben Polyester, bevorzugt PET, dem IR-reflektierenden Pigment und dem UV-Stabilisator, 1 bis 20 Gew.-% einer im Polyester löslichen organischen Phosphorverbindung als Flammschutzmittel. Als Flammschutzmittel ist [(6-oxido-6H-dibenz[c,e][1,2]oxaphosphorin-6-yl)methyl]butandicarbonsäure-bis-(2-hydroxyethyl)ester mit der Formel

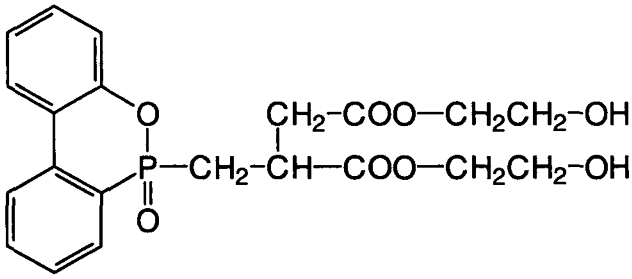

bevorzugt.

Da die Flammschutzmittel im allgemeinen eine gewisse Hydrolyseempfindlichkeit aufweisen, kann der zusätzliche Einsatz eines Hydrolysestabilisators sinnvoll sein. Geeignete Hydrolysestabilisatoren sind hierbei beispielsweise polymere Carbodiimide. In dieser bevorzugten Ausführungsform enthält die erfindungsgemäße schwer entflammbare Folie als Hauptbestandteil kristallisierbaren Polyester bzw. PET, 1 bis 20 Gew.-% einer im Polyester löslichen organischen Phosphorverbindung als Flammschutzmittel und bevorzugt 0,1 bis 1,0 Gew.-% eines Hydrolysestabilisators, bezogen auf das Gewicht der damit ausgerüsteten Schicht.

Die beschriebenen Anteile an Flammschutzmittel, Pigment und UV-Stabilisator haben sich auch dann als günstig erwiesen, wenn der Hauptbestandteil der Folie nicht Polyethylenterephthalat, sondern ein anderer Polyester ist.

Darüber hinaus ergaben Messungen, dass die erfindungsgemäße Folie bei Temperaturbelastungen von 100 °C über einen längeren Zeitraum nicht versprödet.

Wo eine sehr gute Siegelfähigkeit gefordert wird und wo diese Eigenschaft nicht über eine Inline-Beschichtung erreicht werden kann, ist die erfindungsgemäße Folie zumindest dreischichtig aufgebaut und umfasst dann in einer besonderen Ausführungsform die Basisschicht B, eine siegelfähige Deckschicht A und eine gegebenenfalls siegelfähige Deckschicht C. Ist die Deckschicht C ebenfalls siegelfähig, dann sind die beiden Deckschichten vorzugsweise identisch.

Die durch Coextrusion auf die Basisschicht B aufgebrachte siegelfähige Deckschicht A ist bevorzugt auf Basis von Polyestercopolymeren aufgebaut und besteht im wesentlichen oder ganz aus Copolyestern, die überwiegend aus Isophthalsäure-, Bibenzolcarbonsäure-und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Siegeleigenschaften bereitstellen, sind solche, die aus Ethylenterephthalat- und Ethylenisophthalat-Einheiten aufgebaut sind. Der Anteil an Ethylenterephthalat beträgt bevorzugt 40 bis 95 Mol-% und der entsprechende Anteil an Ethylenisophthalat 60 bis 5 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

Für die gegebenenfalls siegelfähige Deckschicht C und für eventuell vorhandene Zwischenschichten können prinzipiell die gleichen Polymeren verwendet werden, die auch in der Basisschicht Verwendung finden.

Die gewünschten Siegel- und die gewünschten Verarbeitungseigenschaften der erfindungsgemäßen Folie werden aus der Kombination der Eigenschaften des verwendeten Copolyesters für die siegelfähige Deckschicht und den Topographien der siegelfähigen Deckschicht A und der gegebenenfalls siegelfähigen Deckschicht C erhalten.

Die Siegelanspringtemperatur von bevorzugt 110°C und die Siegehahtfestigkeit von bevorzugt mindestens 1,3 N/15mm wird insbesondere erreicht, wenn für die siegelfähige Deckschicht A die oben näher beschriebenen Copolymere verwendet werden. Die besten Siegeleigenschaften der Folie erhält man, wenn dem Copolymeren keine weiteren Additive, insbesondere keine anorganischen oder organischen Pigmente zugegeben werden. Für diesen Fall erhält man bei vorgegebenem Copolyester die niedrigste Siegelanspringtemperatur und die höchsten Siegelnahtfestigkeiten. Allerdings ist in diesem Fall das Handling der Folie eingeschränkt, da die Oberfläche der siegelfähigen Deckschicht A stark zum Verblocken neigt. Die Folie lässt sich kaum wickeln und ist für eine Weiterverarbeitung auf schnelllaufenden Maschinen nur bedingt geeignet. Zur Verbesserung des Handlings der Folie und der Verarbeitbarkeit ist es vorteilhaft, die siegelfähige Deckschicht A zu modifizieren. Dies geschieht am besten mit Hilfe von geeigneten Antiblockmitteln einer ausgewählten Größe, die in einer bestimmten Konzentration der Siegeischicht zugegeben werden und zwar derart,

dass einerseits das Verblocken minimiert und andererseits die Siegeleigenschaften nur unwesentlich verschlechtert werden. Geeignete Antiblockmittel sind anorganische und/oder organische Partikel beispielsweise Siliciumdioxid (gefällt oder pyrogen), Calciumcarbonat, Magnesiumcarbonat, Bariumcarbonat, Calciumsulfat, Bariumsulfat, Lithiumphosphat, Calciumphosphat, Magnesiumphosphat, Titandioxid (Rutil oder Anatas), Kaolin (hydratisiert oder calciniert), Aluminiumoxid, Aluminiumsilikate Lithiumfluorid, Calcium-, Barium-, Zinksalze der eingesetzten Dicarbonsäuren oder vernetzte Polymerpartikel, z. B. Polystyrol oder Polymethylmethacrylatpartikel. Es können auch Mischungen von zwei oder mehreren der oben genannten Partikel oder Mischungen von Partikeln mit gleicher chemischer Zusammensetzung, aber unterschiedlicher Partikelgröße gewählt werden. Sofern die siegelfähige Deckschicht A Antiblockmittel enthält, beträgt ihre Gesamtkonzentration (bezogen auf die Deckschicht A) 0,001 bis 5 Gew.-%, bevorzugt 0,01 bis 2 Gew.-% und besonders bevorzugt 0,1 bis 1 Gew.-%. Die Antiblockmittel haben eine mittlere Partikelgröße ($d_{50}$-Wert) von 0,01 bis 10 μm, bevorzugt 0,03 bis 5 μm und besonders bevorzugt 0,05 bis 1 μm.

Zwischen der Basisschicht und den Deckschichten kann sich gegebenenfalls jeweils noch eine Zwischenschicht befinden. Sie kann aus den für die Basisschicht beschriebenen Polymeren bestehen. In einer besonders bevorzugten Ausführungsform besteht sie aus dem für die Basisschicht verwendeten Polyester. Sie kann neben dem IR-reflektierenden Pigment und dem UV-Stabilisator auch weitere Additive enthalten. Die Dicke der Zwischenschicht ist im allgemeinen größer als 0,3 μm und liegt vorzugsweise im Bereich von 0,5 bis 15 μm, insbesondere 1,0 und 10 μm.

Die Dicke der Deckschicht(en) ist im allgemeinen größer als 0,1 μm und liegt vorzugsweise im Bereich von 0,2 bis 5,0 μm, insbesondere 0,2 bis 4,0 μm, wobei die Deckschichten gleich oder verschieden dick sein können.

Die Gesamtdicke der erfindungsgemäßen Folie kann innerhalb weiter Grenzen variieren und richtet sich nach dem beabsichtigten Verwendungszweck. Sie beträgt bevorzugt 3 bis 200 μm, insbesondere 5 bis 150 μm und besonders bevorzugt 10 bis 100 μm, wobei die Basisschicht einen Anteil von vorzugsweise etwa 40 bis 99 % an der Gesamtdicke hat.

Des weiteren ist die erfindungsgemäße Folie ohne Umweltbelastung rezyklierbar, wobei die aus dem Rezyklat hergestellte Folie praktisch keine Verschlechterung in den optischen Eigenschaften (insbesondere in der Gelbzahl) oder den mechanischen Eigenschaften gegenüber einer aus neuen Ausgangsmaterialien hergestellten zeigt.

Darüber hinaus lässt sich die erfindungsgemäße Folie auch ohne Vortrocknen thermoformen, so dass komplexe Formkörper daraus hergestellt werden können.

Der Thermoformprozess umfasst in der Regel die Schritte Vortrocknen, Aufheizen, Formen, Abkühlen, Entformen und Tempern. Beim Thermoformprozess wurde festgestellt, dass sich die erfindungsgemäßen Folien ohne Vortrocknen überraschenderweise tiefziehen lassen. Dieser Vorteil im Vergleich zu tiefziehfähigem Polycarbonat- oder Polymethacrylatfolien, bei denen je nach Dicke Vortrocknungszeiten von 10 bis 15 Stunden, bei Temperaturen von 100 bis 120°C erforderlich sind, reduziert drastisch die Kosten des Umformprozesses.

Für das Thermoformen wurden beispielweise folgende Verfahrensparameter gefunden:

| **Verfahrensschritt** | **Erfindungsgemäße Folie** |
|---|---|
| Vortrocknen | nicht erforderlich |
| Temperatur der Form | 100 bis 160°C |
| Aufheizzeit | kleiner (<) 5 Sekunden pro 10 μm Dicke |
| Folientemperatur beim Verformen | 160 bis 200 °C |
| Möglicher Verstreckfaktor | 1,5 bis 2,0 |
| Detailwiedergabe | gut |
| Schrumpf (Schwindung) | kleiner (<)1,5 % |

Überraschenderweise wurde beim Thermoformen um den Verstreckfaktor von 2,0 festgestellt, dass die optischen Eigenschaften, besonders die Mattigkeit, die Trübung und die Transparenz der Folie homogen und unverändert bleiben. Dies ist vermutlich darauf zurückzuführen, dass die plättchenförmigen, IR-reflektierenden Pigmentteilchen durch die hohe Längs- und Querstreckung und die anschließende Thermofixierung im Folienherstellungsprozess eine weitestgehende Ausrichtung parallel zur Folienoberfläche haben.

Gegenstand der vorliegenden Erfindung ist auch ein Verfahren zur Herstellung der erfindungsgemäßen Folie. Allgemein erfolgt die Herstellung durch ein Extrusionsverfahren, beispielsweise auf einer Extrusionsstrasse. Als besonders vorteilhaft hat es sich erwiesen, das IR-reflektierende Pigment, den UV-Stabilisator sowie gegebenenfalls die weiteren Additive in Form von vorgetrockneten oder vorkristallisierten Masterbatchen vor der Extrusion zuzugeben.

Bevorzugt bei der Masterbatchtechnologie ist, dass die Korngröße und das Schüttgewicht der Masterbatche ähnlich der Korngröße und dem Schüttgewicht des verwendeten Polyesterrohstoffs sind, so dass eine homogene Verteilung erreicht wird, aus der homogene Eigenschaften resultieren.

Die erfindungsgemäßen Polyesterfolien können nach bekannten Verfahren aus einem Polyesterrohstoff, gegebenenfalls weiteren Rohstoffen, mindestens einem bevorzugt plättchenförmigen, IR-reflektierenden Pigment und

einem UV-Stabilisator sowie gegebenenfalls weiteren üblichen Additiven (letztere in üblicher Menge von 0,1 bis 30 Gew.-%, bezogen auf das Gewicht der damit ausgerüsteten Schichten) als mehrschichtige -gegebenenfalls coextrudierte - Folien mit gleichen oder unterschiedlich ausgebildeten Oberflächen hergestellt werden, wobei eine Oberfläche beispielsweise Partikel enthält und die andere nicht oder alle Schichten Partikel enthalten. Außerdem können eine oder beide Oberflächen der Folie nach bekannten Verfahren mit einer funktionalen Beschichtung versehen werden.

Masterbatche, die die IR-reflektierenden Pigmente enthalten, sollten bevorzugt vorkristallisiert oder vorgetrocknet sein. Das gleiche gilt für Masterbatche, die UV-Stabilisatoren, Flammschutzmittel und/oder andere Additive enthalten. Diese Vortrocknung beinhaltet ein graduelles Erhitzen der Masterbatche unter reduziertem Druck (20 bis 80 mbar, vorzugsweise 30 bis 60 mbar, insbesondere 40 bis 50 mbar) sowie Rühren und gegebenenfalls ein Nachtrocknen bei konstanter, erhöhter Temperatur (ebenfalls unter reduziertem Druck). Die Masterbatche werden vorzugsweise bei Raumtemperatur aus einem Dosierbehälter in der gewünschten Abmischung zusammen mit dem Polyesterrohstoff und gegebenenfalls anderen Rohstoffkomponenten chargenweise in einen Vakuumtrockner, der im Laufe der Trocken- bzw. Verweilzeit ein Temperaturspektrum von ca. 10 bis 160 °C, vorzugsweise 20 bis 150 °C, insbesondere 30 bis 130 °C durchläuft, gefüllt. Während der etwa 6-stündigen, vorzugsweise 5-stündigen, insbesondere 4-stündigen, Verweilzeit wird die Rohstoffmischung mit ca. 10 bis 70 Upm, vorzugsweise 15 bis 65 Upm, insbesondere 20 bis 60 Upm, gerührt. Das so vorkristallisierte bzw. vorgetrocknete Rohstoffgemisch wird in einem nachgeschalteten ebenfalls evakuierten Behälter bei ca. 90 bis 180 °C, vorzugsweise 100 bis 170°C, insbesondere 110 bis 160 °C, für 2 bis 8 Stunden, vorzugsweise 3 bis 7 Stunden, insbesondere 4 bis 6 Stunden, nachgetrocknet.

Bei dem bevorzugten Extrusions- bzw. Koextrusionsverfahren zur Herstellung der Folie wird das aufgeschmolzene Polymermaterial mit den anderen Inhaltsstoffen durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals in Längsrichtung und/oder Querrichtung verstreckt ("orientiert"). Die Strecktemperaturen liegen im allgemeinen 10 bis 60 °C über der Glasübergangstemperatur $T_g$ der Folie, das Streckverhältnis der Längsstreckung liegt üblicherweise bei 2,0 bis 6,0, insbesondere bei 3,0 bis 4,5, das der Querstreckung bei 2,0 bis 5,0, insbesondere bei 3,0 bis 4,5, und das der gegebenenfalls durchgeführten zweiten Längs- und Querstreckung bei ca. 1,1 bis 5,0. Die erste Längsstreckung kann auch gleichzeitig mit der Querstreckung (Simultanstreckung) durchgeführt werden. Es folgt die Thermofixierung der Folie bei Ofentemperaturen von 180 bis 260 °C, insbesondere von 220 bis 250 °C. Anschließend wird die Folie abgekühlt und gewickelt.

Es war überraschend, dass insbesondere durch den Einsatz der beschriebenen Additive bzw. Inhaltsstoffe und der Masterbatchtechnologie, kombiniert mit einer geeigneten Vortrocknung und/oder Vorkristallisation eine IR-reflektierende Folie mit dem geforderten Eigenschaftsprofil ohne technische Probleme (wie Verklebungen im Trockner) herstellbar ist. Es wurden bei der Herstellung kaum oder keine Ablagerungen an den Düsen oder Rahmenausdampfungen beobachtet, wodurch die erfindungsgemäße Folie eine exzellente Optik, ein ausgezeichnetes Profil und eine ausgezeichnete Planlage aufweist. Sie lässt sich hervorragend verstrecken, so dass sie verfahrenssicher und wirtschaftlich rentabel hergestellt werden kann.

Überraschend war, dass die Folie neben der hervorragenden Thermoformbarkeit ohne Beeinflussung der optischen Eigenschaften nach 5000 Stunden Weather-o-meter-Bewitterung (WOM-Bewitterung) eine Gelbzahländerung von lediglich kleiner (<) 6 zeigte und die IR-reflektierende Wirkung, die hohe Lichttransmission und das Streuverhalten für sichtbaren Licht mehr oder weniger unbeeinflusst bleiben. Selbst nach dieser künstlichen, sehr anspruchsvollen Bewitterung ist die Transmission für Strahlung im Wellenlängenbereich von 750 bis 1300 nm (IR) kleiner als 50 %.

Des weiteren ist es sehr überraschend, dass auch das Regenerat bei der Folienherstellung wieder einsetzbar ist, ohne die Gelbzahl der Folie negativ zu beeinflussen. Auch im Vergleich zu einer nicht ausgerüsteten Folie ist die Gelbzahl im Rahmen der Messgenauigkeit nicht negativ verändert.

Durch die Kombination ihrer Eigenschaften eignen sich die erfindungsgemäßen Folien für eine Vielzahl verschiedener Anwendungen, beispielsweise im Innen- und Außenbereich, auf dem Bausektor und im Messebau, im Laden- und Regalbau, im Elektronikbereich und auf dem Beleuchtungssektor, für Gewächshäuser, Messe- und Werbeartikel, Lichtwerbeprofile, Schutzverglasungen von Maschinen und Fahrzeugen, Displays, Schilder und für Verpackungen, insbesondere von wärmeempfindlichen Gütern, ohne darauf beschränkt zu sein.

Die Erfindung wird im Folgenden anhand von Ausführungsbeispielen näher erläutert, ohne darauf beschränkt zu sein.

**Messmethoden**

DIN = Deutsches Institut für Normung
ASTM = American Society for Testing and Materials
ISO = Internat. Organization for Standardization

**Lichttransmission (Transparenz)**

Unter der Lichttransmission ist das Verhältnis des insgesamt durchgelassenen Lichtes zur einfallenden Lichtmenge zu verstehen.
Die Lichttransmission wird mit dem Messgerät "® HAZEGARD plus" (Fa. Byk Gardener, DE) nach ASTM D 1003 gemessen.

**Trübung / Bildschärfe**

Die Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner 2,5° ermittelt.
Die Trübung und die Bildschärfe wird mit dem Messgerät "®HAZEGARD plus" (Fa. Byk Gardener,DE) nach ASTM D 1003 gemessen.

**Gelbzahl**

Die Gelbzahl der Folie wird nach ASTM D 1925-70 mittels eines Spektralphotometers Typ "Lamda 12" (Fa. Perkin Elmer,US), Normlichtart D65, 10° Normalbeobachter bestimmt. Aus den gemessenen Normfarbwerten X, Y, Z erfolgt die Berechnung der Gelbzahl gemäß der Gleichung

$$YID = [100 \cdot (1{,}28 \cdot X - 1{,}06 \cdot Z)] / Y$$

**Oberflächendefekte**

Die Oberflächendefekte werden visuell bestimmt.

**Mechanische Eigenschaften**

Der E-Modul, die Reißfestigkeit, die Reißdehnung und der $F_5$-Wert werden in Längs- und Querrichtung nach ISO 527-1-2 mit Hilfe eines Zug-Dehnungsmessgerät (Fa. Zwick, Typ 010, Ulm, DE) gemessen.

**Standardviskosität (SV) und intrinsische Viskosität (IV):**

Die Standardviskosität SV wurde - angelehnt an DIN 53726 - als 1%ige Lösung in Dichloressigsäure (DCE) bei 25 °C gemessen. SV (DCE) = ($\eta_{rel}$-1) x 1000. Die intrinsische Viskosität (IV) berechnet sich wie folgt aus der Standardviskosität (SV)

$$IV = [\eta] = 6{,}907 \cdot 10^{-4} \ SV\ (DCE) + 0.063096 \ [dl/g]$$

**Brandverhalten**

Das Brandverhalten wurde nach DIN 4102 Teil 2, Baustoffklasse B2 und nach DIN 4102 Teil 1, Baustoffklasse B1 sowie nach dem UL 94 VTM-Test ermittelt.

**Thermoformbarkeit**

Die Folien aus den Beispielen 1 bis 8 sowie die Vergleichsbeispiele 1 und 2 lassen sich auf handelsüblichen Tiefziehmaschinen, z. B. der Fa. Adolf Illig Maschinenbau (Heilbronn, DE), ohne Vortrocknung zu Formkörpern thermoformen. Die Detailwiedergabe der Formkörper ist bei einer homogenen Oberfläche hervorragend.

**Bewitterung / UV-Stabilität**

Die UV-Stabilität wurde nach der Testspezifikation ISO 4892 wie folgt geprüft:

| | |
|---|---|
| Testgerät | Atlas Ci 65 Weather-o-meter |
| Testbedingungen | gemäß ISO 4892, d.h. künstliche Bewitterung |
| Bestrahlungszeit | 5000 Stunden (pro Seite) |
| Bestrahlung | 0,5 W/m$^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben, dann wieder 102 Minuten UV-Licht usw. |

**Siegelanspringtemperatur (Mindestsiegeltemperatur)**

Mit dem Siegelgerät HSG/ET der Fa. Brugger Feinmechanik (München, DE) wurden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wurde. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Siegelanspringtemperatur ist die Temperatur, bei der eine Siegelnahtfestigkeit von mindestens 0,5 N/mm$^2$ erreicht wird.

**Siegelnahtfestigkeit**

Zur Bestimmung der Siegelnahtfestigkeit wurden zwei 15 mm breite Folienstreifen übereinandergelegt und bei 130 °C, einer Siegelzeit von 0,5 s und einem Siegeldruck von 2 bar mit einem Gerät Typ NDS der Fa. Brugger Feinmechanik (München, DE) mit einseitig beheizter Siegelbacke gesiegelt. Die Siegelnahtfestigkeit wurde nach der T-Peel-Methode bestimmt.

**Glanz**

Der Glanz wird nach DIN 67530 bestimmt. Gemessen wurde der Reflektorwert als optische Kenngröße für die Oberfläche der Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den Detektor treffenden Lichtstrahlen werden als proportionale elektrische Größe angezeigt. Der Messwert ist dimensionslos und muss mit dem Einstrahlwinkel angegeben werden.

**Rauigkeit**

Die Rauigkeit $R_a$ der Folie wird nach DIN 4768 bei einem cut-off von 0,25 nm bestimmt.

**IR-Durchlässigkeit**

Die IR-Durchlässigkeit der Folie wird anhand eines IR-Transmissionsspektrums bestimmt. Verwendet wurde ein FT-IR-Gerät Typ 1600 der Fa. Perkin Elmer, US. Der gemessene Wellenlängenbereich erstreckt sich von 750 bis 1300 nm. Die IR-Durchlässigkeit gemessen in % ist das Verhältnis der durchgelassenen Lichtmenge zur einfallenden Lichtmenge in diesem Wellenlängenbereich.

**Diethylenglykol-, Polyethylenglykol- und Isophthalsäuregehalt**

Der Diethylenglykol-, Polyethylenglykol- und Isophthalsäuregehalt wird nach alkalischem Aufschluss der Probe gaschromatographisch ermittelt.

**Bestimmung der Länge von Vakuolen**

Die Bestimmung der Länge von Vakuolen in der Folie erfolgte anhand von REM-Aufnahmen von Mikrotomschnitten.

**Beispiele**

Bei den nachstehenden Beispielen und Vergleichsbeispielen handelt es sich jeweils um mehrschichtige Folien, die auf der beschriebenen Extrusionsstraße hergestellt wurden. Sofern nichts anderes angegeben ist, sind die Folien jeweils 23 μm dick. Wenn nichts anderes angegeben ist, wird in den Beispielen jeweils der Polyethylen-terephthalatgehalt um die Gewichtsprozente der verschiedenen Zusätze reduziert.

Die Folien wurden nach der Testspezifikation ISO 4892 beidseitig je 5000 Stunden mit einem Ci 65 Weather-o-meter (Fa. Atlas, US) bewittert und anschließend bezüglich der mechanischen Eigenschaften, der Verfärbung, der Oberflächendefekte der Trübung und des Glanzes geprüft.

Die Additive zur Erzielung der IR-Reflexion und der zusätzlichen Funktionalitäten wurden in Form von verschiedenen Masterbatchen zudosiert:

Das Masterbatch *MB1* setzte sich aus 10 Gew.-% des plättchenförmigen Pigmentes ®Iriodin SHR 870 (Fa. Merck, DE) und 90 Gew.-% Polyethylenterephthalat (Typ RT49, Fa. KoSa, DE) zusammen. Das Masterbatch hatte ein Schüttgewicht von 750 kg/$m^3$.

Das Masterbatch *MB2* setzte sich aus 20 Gew.-% 2-(4,6-Diphenyl-[1,3,5]-triazin-2-yl)-5-hexyloxyphenol (®Tinuvin 1577 von Fa. Ciba Specialty Chemicals, CH) und 80 Gew.-% Polyethylenterephthalat (Typ RT49, Fa. KoSa, DE) zusammen. Das Masterbatch hatte ein Schüttgewicht von 750 kg/$m^3$.

Zur Herstellung einer flammhemmenden Folie wurde folgendes Masterbatch eingesetzt: Masterbatch *MB3*, ein Copolyester aus Terephthalsäure, Ethylenglykol und 30 Gew.-% [(6-oxido-6H-dibenz [c,e][1,2]oxaphosphorin-6-yl)methyl]butandicarboxylsäure-bis(2-hydroxyethyl)ester (Typ VA09, Fa. KoSa, DE).

**Beispiel 1**

Es wurde eine coextrudierte ABA-Mehrschichtfolie hergestellt. Das Polyethylenterephthalat, aus dem die Basisschicht hergestellt wurde, hatte eine Standardviskosität SV (DCE) von 810 (entspricht einer intrinsischen Viskosität IV [DCE] von 0,658 dl/g), einen IPA-Gehalt von 8,0 % und einen DEG-Gehalt von 2,5 %.

Für die beiden Deckschichten A wurde ein Polyethylenterephthalat verwendet, das eine Standardviskosität SV (DCE) von 770 hatte (entspricht einer intrinsischen Viskosität IV [DCE] von 0,632 dl/g) und einen IPA-Gehalt von 8,0 % und einen DEG-Gehalt von 2,5 %. Beide Deckschichten enthielten neben Polyethylenterephthalat 20 Gew.-% des Masterbatches *MB1* und 5 Gew.-% des Masterbatches *MB2*.

70 Gew.-% Polyethylenterephthalat der Basisschicht und 30 Gew.-% Polyethylenterephthalatrezyklat (Basisschicht) sowie 75 Gew.-% Polyethylenterephthalat der Deckschichten, 20 Gew.-% *MB1* und 5 Gew.-% *MB2* wurden bei Raumtemperatur aus separaten Dosierbehältern in einen Vakuumtrockner (Basisschicht) und einen Vakuumtrockner (Deckschichten) gefüllt. Beide Vakuumtrockner durchliefen von Einfüllzeitpunkt bis zum Ende der Verweilzeit ein Temperaturspektrum von 25 bis 130 °C. Während der ca. 4-stündigen Verweilzeit wurden die Rohstoffgemische für Basisschicht und Deckschichten mit 61 Upm gerührt. Die vorkristallisierten bzw. vorgetrockneten Rohstoffgemische wurden in den nachgeschalteten, ebenfalls unter Vakuum stehenden Hoppern (Basisschicht und Deckschichten) bei 140 °C 4 Stunden nachgetrocknet. Anschließend wurde die 23 μm dicke ABA-Folie mit dem beschriebenen Extrusionsverfahren hergestellt. Die beiden Deckschichten A waren jeweils 1 μm dick. Die Basisschicht hatte eine Dicke von 21 μm

Die Verfahrensparameter waren:

| | |
|---|---|
| Längsstreckverhältnis $\lambda_L$ | = 3,1 |
| Längsstrecktemperatur $T_L$ | = 110 °C |
| Querstreckverhältnis $\lambda_Q$ | = 3,1 |
| Querstrecktemperatur $T_Q$ | = 110°C |
| Thermofixiertemperatur $_{Tfix}$ | = 230 °C |

**Beispiel 2**

Entsprechend Beispiel 1 wurde eine ABA-Folie hergestellt. Im Unterschied zu Beispiel 1 enthielt die Folie nur 10 Gew.-% *MB1* in beiden Deckschichten A.

**Beispiel 3**

Beispiel 1 wurde wiederholt. In Abänderung zu Beispiel 1 enthielt die ABA-Folie zusätzlich 20 Gew.-% *MB3* in der Basisschicht.

**Beispiel 4**

Beispiel 1 wurde wiederholt. In Abänderung zu Beispiel 1 enthielt die ABA-Folie zusätzlich 10 Gew.-% *MB1* in der Basisschicht.

**Beispiel 5**

Beispiel 1 wurde wiederholt. In Abänderung zu Beispiel 1 enthielt die ABA-Folie zusätzlich 10 Gew.-% *MB1* und 5 Gew.-% *MB2* in der Basisschicht.

**Beispiel 6**

Beispiel 1 wurde wiederholt. In Abänderung zu Beispiel 1 waren die Verfahrensparameter wie folgt:

| | |
|---|---|
| Längsstreckverhältnis $\lambda_L$ | = 3,5 |
| Längsstrecktemperatur $T_L$ | = 110 °C |
| Querstreckverhältnis $\lambda_Q$ | = 3,5 |
| Querstrecktemperatur $T_Q$ | = 110°C |
| Thermofixiertemperatur $_{Tfix}$ | = 230 °C |

**Beispiel 7**

In Abänderung zu Beispiel 1 wurde eine ABC-Folie hergestellt, die einseitig siegelbar (C-Seite) war. Deckschicht A und Basisschicht waren identisch mit den Schichten aus Beispiel 1.

Für die 1 µm dicke siegelfähige Deckschicht C wurde ein Copolyester aus 78 Mol-% Ethylenterephthalat und 22 Gew.-% Ethylenisophthalat verwendet (hergestellt durch Umesterung in Gegenwart eines Mangankatalysators, Mangankonzentration: 100 ppm).

**Beispiel 8**

Beispiel 7 wurde wiederholt. In Abänderung zu Beispiel 7 enthielt die Basisschicht zusätzlich 10 Gew.-% *MB1* und 5 Gew.-% *MB2*.

**Vergleichsbeispiel 1**

Beispiel 1 wurde wiederholt. In Abänderung zu Beispiel 1 enthält die Folie kein *MB2*.

**Vergleichsbeispiel 2**

Beispiel 1 wurde wiederholt. In Abänderung zu Beispiel 1 enthält die Folie kein *MB1.*

**Vergleichsbeispiel 3**

In Abänderung zu Beispiel 1 ist die Folie unorientiert, d. h. nicht verstreckt.

**Vergleichsbeispiel 4**

In Abänderung zu Beispiel 1 hat der eingesetzte Polyethylenterephthalatrohstoff für die Basisschicht und die Deckschichten einen DEG-Gehalt von 0,6 Gew.-% und einen IPA-Gehalt von 0 Gew.-%.

**Vergleichsbeispiel 5**

Beispiel 3 der WO 94/05727 wurde nachgearbeitet.

Die erzielten Ergebnisse sind in der Tabelle zusammengefasst.

**Tabelle**: Eigenschaftsprofil der hergestellten Folien

| Eigenschaften | | B1 | B2 | B3 | B4 | B5 | B6 | B7 | B8 | VB1 | VB2 | VB3 | VB4 | VB5 |
|---|---|---|---|---|---|---|---|---|---|---|---|---|---|---|
| Visuelles Erscheinungsbild | | matt | matt | matt | matt | matt | matt | matt | matt | matt | klar | trübe | matt | trübe |
| Oberflächendefekte[1] | | ++ | ++ | ++ | ++ | ++ | ++ | ++ | ++ | ++ | ++ | +- | +- | - |
| Transparenz | % | 88 | 91 | 87 | 84 | 85 | 86 | 91 | 90 | 89 | 92 | 88 | 84 | 85 |
| Trübung | % | 12 | 8 | 14 | 18 | 20 | 33 | 10 | 11 | 12 | 1 | 7 | 27 | 12 |
| Bildschärfe | % | 70 | 72 | 69 | 61 | 55 | 42 | 73 | 72 | 71 | 89 | 71 | 64 | 89 |
| Vakuolen von bis | µm | 0,5 - 15 | 0,5 - 15 | 0,5 - 15 | 0,5 - 15 | 0,5 - 15 | 2,0 - 20 | 0,5 - 15 | 0,5 - 15 | 0,5 - 15 | - [2] | - [2] | 1,5 - 25 | - [2] |
| Glanz 60° | - | 39 | 54 | 41 | 39 | 40 | 36 | 40 [4] | 41 [4] | 39 | 73 | 50 | 35 | 81 |
| Rauigkeit $R_a$ | nm | 311 | 167 | 316 | 305 | 315 | 432 | 308 [4] | 315 [4] | 335 | 18 | 287 | 432 | 182 |
| $R_t$ | nm | 2787 | 1870 | 2690 | 2812 | 2723 | 3054 | 2743 [4] | 2798 [4] | 2389 | 108 | 2199 | 3159 | 1489 |
| $R_z$ | nm | 1991 | 1267 | 1901 | 1956 | 1921 | 2178 | 1948 [4] | 1979 [4] | 1810 | 54 | 1729 | 2156 | 1115 |
| IR-Transmission | % | 31 | 42 | 29 | 19 | 17 | 25 | 33 | 34 | 32 | 78 | 59 | 29 | 39 |
| E-Modul längs | $N/mm^2$ | 4087 | 4121 | 3999 | 4039 | 4093 | 4204 | 4059 | 4167 | 4111 | 4199 | 2892 | 4522 | 2523 |
| E-Modul quer | $N/mm^2$ | 5695 | 5523 | 5538 | 5601 | 5559 | 5730 | 5584 | 5611 | 5698 | 5638 | 3110 | 5859 | 3219 |
| F5 längs | $N/mm^2$ | 108 | 106 | 110 | 108 | 110 | 121 | 108 | 109 | 112 | 106 | 91 | 123 | - |
| F5 quer | $N/mm^2$ | 113 | 111 | 114 | 116 | 112 | 120 | 112 | 113 | 110 | 112 | 89 | 132 | - |
| Reißfestigkeit längs | $N/mm^2$ | 244 | 232 | 241 | 239 | 243 | 263 | 243 | 242 | 235 | 239 | 90 | 271 | 50 |
| Reißfestigkeit quer | $N/mm^2$ | 269 | 254 | 251 | 266 | 265 | 276 | 255 | 257 | 261 | 260 | 97 | 280 | 45 |
| Reißdehnung längs | % | 124 | 131 | 122 | 125 | 127 | 117 | 120 | 123 | 124 | 126 | 143 | 115 | 10 |
| Reißdehnung quer | % | 116 | 119 | 112 | 114 | 115 | 109 | 114 | 117 | 118 | 118 | 139 | 107 | 5 |
| Thermoformbarkeit[1] | - | ++ | ++ | ++ | ++ | ++ | ++ | ++ | ++ | ++ | ++ | - | - | - |
| Gelbzahl nach Herstellung | - | 1,5 | 1,6 | 1,7 | 1,6 | 1,9 | 1,5 | 1,6 | 1,8 | 1,3 | 1,4 | 1,4 | 1,6 | 5,6 |
| Gelbzahl nach 5000h Bewitterung | - | 3,9 | 4,1 | 3,7 | 4,0 | 3,1 | 3,9 | 3,7 | 3,2 | 8,9 | 4,1 | 3,9 | 3,8 | 15,3 |
| UV-Absorption[1] | - | ++ | ++ | ++ | ++ | ++ | ++ | ++ | ++ | - | ++ | ++ | ++ | - |
| Brandverhalten[1] | - | - | - | ++ | - | - | - | - | - | - | - | - | - | ++ |
| Mindestsiegeltemperatur | °C | - | - | - | - | - | - | 95 | 96 | - | - | - | - | - |
| Siegelnahtfestigkeit (C-Seite / C-Seite) | $N/mm^2$ | - | - | - | - | - | - | 2,3 | 2,2 | - | - | - | - | - |

[1] – schlecht; +- akzeptabel; + gut; ++ sehr gut [2] keine Vakuolen [3] nicht messbar [4] gemessen auf Seite A

**Patentansprüche**

1. Mehrschichtige, biaxial orientierte Polyesterfolie enthaltend

   a. als Hauptbestandteil der Basisschicht B einen kristallisierbaren Polyester, der gegenüber Standardpolyestern einen erhöhten Diethylenglykol- und/oder Isophthalsäure- und/oder Polyethylenglykolgehalt aufweist,
   b. mindestens ein IR-reflektierendes Pigment und
   c. mindestens einen UV-Stabilisator.

2. Polyesterfolie nach Anspruch 1, **dadurch gekennzeichnet, dass** es sich bei dem kristallisierbaren Polyester um Polyethylenterephthalat, Polyethylennaphthalat, Polybutylenterephthalat oder Polytrimethylenterephthalat handelt.

3. Polyesterfolie nach Anspruch 1 oder 2, **dadurch gekennzeichnet, dass** der kristallisierbare Polyester einen Diethylenglykolgehalt von 1 bis 10 Gew.-% und/oder einen Isophthalsäuregehalt von 2 bis 20 Gew.-% und/oder einen Polyethylenglykolgehalt von 1 bis 10 Gew.-% aufweist.

4. Polyesterfolie nach einem oder mehreren der Ansprüche 1 bis 3, **dadurch gekennzeichnet, dass** der Anteil an kristallisierbarem Polyester in der Basisschicht 50 bis 100 Gew.-% beträgt, bezogen auf das Gewicht der Basisschicht B.

5. Polyesterfolie nach einem oder mehreren der Ansprüche 1 bis 4, **dadurch gekennzeichnet, dass** das IR-reflektierende Pigment plättchenförmig ist.

6. Polyesterfolie nach einem oder mehreren der Ansprüche 1 bis 5, **dadurch gekennzeichnet, dass** es sich bei dem IR-reflektierenden Pigment um mit Metalloxiden beschichtetes Schichtsilikat handelt.

7. Polyesterfolie nach einem oder mehreren der Ansprüche 1 bis 6, **dadurch gekennzeichnet, dass** die Folie das IR-reflektierende Pigment zwischen 0,5 und 50 Gew.-% enthält, bezogen auf das Gewicht der damit ausgerüsteten Schichten.

8. Polyesterfolie nach einem oder mehreren der Ansprüche 1 bis 7, **dadurch gekennzeichnet, dass** die Folie für Strahlung im Wellenlängenbereich zwischen 750 und 1300 nm eine Transmission von kleiner 50 % aufweist.

9. Polyesterfolie nach einem oder mehreren der Ansprüche 1 bis 8, **dadurch gekennzeichnet, dass** es sich bei dem UV-Stabilisator um ein 2-Hydroxybenzotriazol, ein Benzoxazinon oder ein Triazin handelt.

10. Polyesterfolie nach einem oder mehreren der Ansprüche 1 bis 9, **dadurch gekennzeichnet, dass** die Folie den UV-Stabilisator zu 0,1 bis 5 Gew.-% enthält, bezogen auf das Gewicht der damit ausgerüsteten Schichten.

11. Polyesterfolie nach einem oder mehreren der Ansprüche 1 bis 10, **dadurch gekennzeichnet, dass** die Folie ein Flammschutzmittel enthält.

12. Polyesterfolie nach einem oder mehreren der Ansprüche 1 bis 11, **dadurch gekennzeichnet, dass** die Folie einen A-B-C Schichtaufbau aufweist, wobei die Deckschichten A und C gleich oder verschieden sein können.

13. Polyesterfolie nach einem oder mehreren der Ansprüche 1 bis 12, **dadurch gekennzeichnet, dass** auch die Deckschichten A und/oder C den kristallisierbaren Polyester der Basisschicht B enthalten.

14. Polyesterfolie nach einem oder mehreren der Ansprüche 1 bis 13; **dadurch gekennzeichnet, dass** zumindest eine Deckschicht A oder C als siegelfähige Deckschicht ausgebildet ist.

15. Polyesterfolie nach einem oder mehreren der Ansprüche 1 bis 14, **dadurch gekennzeichnet, dass** die Folie auf einer oder beiden Oberflächen funktional beschichtet ist.

16. Verfahren zur Herstellung einer Polyesterfolie nach einem oder mehreren der Ansprüche 1 bis 15 umfassend die Schritte

   a. Herstellen einer Folie durch Coextrusion

b. biaxiales Verstrecken der Folie und
c. Thermofixieren der gestreckten Folie.

**17.** Verfahren zur Einstellung der Mattigkeit einer Polyesterfolie nach einem oder mehreren der Ansprüche 1 bis 15, **dadurch gekennzeichnet, dass** bei unveränderter Zusammensetzung der Folie das Längs- und/oder Querstreckverhältnis, die Strecktemperaturen und/oder die Temperatur der Thermofixierung variiert werden.

**18.** Verwendung einer Polyesterfolie nach einem oder mehreren der Ansprüche 1 bis 15 als Wärmeschutzauskleidung oder Wärmeschutzverpackung.